# EUROPEAN PATENT APPLICATION

(11) **EP 4 817 948 A1**
(43) Date of publication of application: **07.10.2026**
(21) Application number: 24895477.8
(22) Date of filing: 24.05.2024
(51) Int. Cl.: B60L 58/13

(54) **VEHICLE CONTROL METHOD AND SYSTEM, AND CHIP, CONTROLLER, VEHICLE AND STORAGE MEDIUM**

(30) Priority: 29.11.2023 CN 202311627112
(71) Applicant: BYD Company Limited, Shenzhen, Guangdong 518118 (CN)
(72) Inventor: YANG, Dongsheng, Shenzhen, Guangdong 518118 (CN); ZHU, Futang, Shenzhen, Guangdong 518118 (CN); WANG, Chunsheng, Shenzhen, Guangdong 518118 (CN); WU, Jinlong, Shenzhen, Guangdong 518118 (CN)
(74) Representative: Mathys & Squire
(86) International application number: PCT/CN2024/095319
(87) International publication number: WO 2025/112367

(57) **Abstract**

A vehicle control method and a vehicle control system. The vehicle control method comprises: acquiring an intended travel route of a vehicle, wherein the intended travel route is divided into k road segments, k being an integer greater than 1; determining target SOCs for the k road segments, wherein a target SOC for an i-th road segment is related to road condition information of road segments before and/or after the i-th road segment, and i = 2, 3, 4,..., k-1; and when the vehicle travels on the intended travel route, controlling at least one of an engine and an electric motor of the vehicle on the basis of an actual SOC of a power battery of the vehicle and a target SOC for the road segment where the vehicle is located.

## Description

### FIELD

The present disclosure relates to the field of vehicle technology, and in particular to a vehicle control method and system, and chip, controller, vehicle and storage medium.

### BACKGROUND

The current energy management strategy for hybrid electric vehicles primarily focuses on meeting power demands, maintaining the battery's state of charge (SOC), and optimizing the working efficiency of the powertrain. During vehicle operation, the energy management strategy rationally allocates power among various power sources by considering their efficiency characteristics to enhance the driving efficiency of the powertrain. However, such an energy management strategy relies solely on the vehicle's own operating conditions for energy control, often leading to unnecessary energy consumption.

### SUMMARY

The present disclosure aims to at least partially address one of the technical problems in the related art.

To achieve the above objective, an embodiment of a first aspect of the present disclosure provides a vehicle control method, which includes:
an intended travel route of a vehicle is acquired, wherein the intended travel route is divided into k road segments, k being an integer greater than 1;
target states of charge (SOCs) for the k road segments are determined, wherein a target SOC for an i-th road segment is related to road condition information of road segments before and/or after the i-th road segment, and i = 2, 3, 4, ..., k-1; and
wherein when the vehicle travels on the intended travel route, at least one of an engine and an electric motor of the vehicle is controlled on the basis of an actual SOC of a power battery of the vehicle and a target SOC for the road segment where the vehicle is located.

By dividing the intended travel route of the vehicle into road segments and comprehensively considering road condition information of a plurality of road segments, the method determines a target SOC corresponding to each road segment. This enables the vehicle to operate according to the target SOC for each road segment while operating through them, thereby allowing the vehicle to travel on the intended travel route with lower energy consumption.

Furthermore, the vehicle control methods according to the embodiments of the present disclosure may further have the following additional technical features:

According to one embodiment of the present disclosure, the target SOCs for the k road segments are determined includes:
on the basis of the road condition information of at least k-1 consecutive road segments, predicted energy demand of at least k-1 road segments are determined; and
on the basis of the predicted energy demand of at least k-1 road segments, the target SOCs for k road segments are determined.

According to an embodiment of the present disclosure, the target SOCs for k road segments are determined on the basis of the predicted energy demand of at least k-1 road segments includes: a predicted SOC variation of a corresponding road segments is determined on the basis of the predicted energy demand; and
on the basis of the predicted SOC variation of at least k-1 road segments, the target SOCs for k road segments are determined.

According to an embodiment of the present disclosure, the target SOCs for k road segments are determined on the basis of the predicted SOC variations of at least k-1 road segments includes:
on the basis of the predicted SOC variations of at least k-1 segments, predicted SOC ranges of the vehicle at the end of the k-th segment are determined; and
on the basis of the predicted SOC ranges for k road segments, the target SOC for k road segments are determined.

According to an embodiment of the present disclosure, the target SOCs for k road segments are determined on the basis of the predicted SOC ranges of the k road segments includes:
on the basis of the predicted SOC ranges of k road segments, a plurality of candidate SOC sequences are determined; and
a target SOC sequence is determined from the plurality of candidate SOC sequences, wherein the target SOC sequence is one, among the plurality of candidate SOC sequences, that enables the vehicle to have the lowest equivalent fuel consumption while operating on the intended travel route.

According to an embodiment of the present disclosure, the candidate SOC sequence is determined includes:
one SOC is selected from the predicted SOC range of each of the k road segments respectively, and one candidate SOC sequence among the plurality of candidate SOC sequences is acquired.

According to an embodiment of the present disclosure, the predicted SOC range at the end of a first road segment of the intended travel route is determined on the basis of an initial SOC of the vehicle on the intended travel route and the predicted SOC variation of the first road segment;
the predicted SOC range at the end of a non-first road segment of the intended travel route is determined on the basis of the predicted SOC variation of the non-first road segment and the predicted SOC range at the end of the preceding road segment of the non-first road segment.

According to an embodiment of the present disclosure, the predicted SOC variation includes a first predicted SOC variation and a second predicted SOC variation; an upper limit value of the predicted SOC range of the first road segment of the intended travel route is determined on the basis of the initial SOC and the first predicted SOC variation of the first road segment, the first predicted SOC variation is a SOC variation when the vehicle operates on the corresponding road segment at a maximum allowable generating power;
a lower limit value of the predicted SOC range of the first road segment is determined on the basis of the initial SOC and the second predicted SOC variation of the first road segment, the second predicted SOC variation is a SOC variation when the vehicle operates on the corresponding road segment at a maximum allowable discharging power; an upper limit value of the predicted SOC range of the non-first road segment of the intended travel route is determined on the basis of the first predicted SOC variation of the non-first road segment and an upper limit value of the predicted SOC range of the preceding road segment of the non-first road segment; and
a lower limit value of the predicted SOC range of the non-first road segment is determined on the basis of the second predicted SOC variation of the non-first road segment and a lower limit value of the predicted SOC range of the preceding road segment of the non-first road segment.

According to an embodiment of the present disclosure, the predicted SOC range of the target road segment of the intended travel route is determined on the basis of a first predicted SOC range of the target road segment and a second predicted SOC range of the target road segment;
in a case where the target road segment is the first road segment of the intended travel route, the first predicted SOC range of the target road segment is determined on the basis of the initial SOC of the vehicle on the intended travel route and the predicted SOC variation of the target road segment;
in a case where the target road segment is not the first road segment of the intended travel route, the first predicted SOC range of the target road segment is determined on the basis of the first predicted SOC range of the preceding road segment of the target road segment and the predicted SOC variation of the target road segment;
in a case where the target road segment is the last road segment of the intended travel route, the second predicted SOC range of the target road segment is a route-end SOC of the power battery when the vehicle travels to an end point of the intended travel route; and
in a case where the target road segment is not the last road segment of the intended travel route, the second predicted SOC range of the target road segment is determined on the basis of the second predicted SOC range of the subsequent road segment of the target road segment and the predicted SOC variation of the subsequent road segment of the target road segment.

According to an embodiment of the present disclosure, the predicted SOC range of the target road segment is an intersection of the first predicted SOC range of the target road segment and the second predicted SOC range of the target road segment.

According to an embodiment of the present disclosure, the predicted SOC variation of the target road segment is determined on the basis of a charge-discharge power range corresponding to the target road segment; and the charge-discharge power range is acquired on the basis of at least one of the following:
the predicted energy demand of the vehicle operating on the corresponding road segment, wherein the predicted energy demand is determined on the basis of the road condition information of the corresponding road segment;
a noise, vibration, and harshness (NVH) restriction power of the engine of the vehicle; and
a maximum charge-discharge power of the power battery.

According to an embodiment of the present disclosure, the predicted energy demand of the target road segment is acquired on the basis of the road condition information of the target road segment and energy consumption impact information, wherein the energy consumption impact information includes at least one of user driving style information and vehicle condition information.

According to an embodiment of the present disclosure, the predicted SOC range includes only one value, the value is recorded as a target value; and the target SOCs for the k road segments are determined on the basis of the predicted SOC ranges of the k road segments includes:
the target values of the predicted SOC ranges of the k road segments are determined as the target SOCs for the k road segments.

According to an embodiment of the present disclosure, a method of determining the predicted SOC ranges of the k road segments includes:
the route-end SOC of the power battery when the vehicle travels to the end point of the intended travel route is determined; and
on the basis of the predicted SOC variations of the at least k-1 road segments and the route-end SOC, the target values for the k road segments are determined. According to an embodiment of the present disclosure, a target value for a k-th road segment is the route-end SOC, and a target value for a (j-1)-th road segment is calculated on the basis of a target value for a j-th road segment and a predicted SOC variation of the j-th road segment, where j = 2, 3, 4, ..., k.

According to an embodiment of the present disclosure, the route-end SOC is determined on the basis of an initial SOC of the power battery of the vehicle on the intended travel route.

According to an embodiment of the present disclosure, in a case where the initial SOC is greater than or equal to a first preset threshold, the route-end SOC is a second preset threshold; and
in a case where the initial SOC is less than the first preset threshold, the route-end SOC is the first preset threshold; wherein the second preset threshold is greater than the first preset threshold.

According to an embodiment of the present disclosure, a method of determining the predicted SOC ranges of the k road segments includes:
an initial SOC of the power battery of the vehicle on the intended travel route is acquired; and
on the basis of the predicted SOC variations of the at least k-1 road segments and the initial SOC, target values for the k road segments are determined.

According to an embodiment of the present disclosure, a target value for the first road segment is calculated on the basis of the initial SOC and the predicted SOC variation of the first road segment, and the target value for the j-th road segment is calculated on the basis of the target value for the (j-1)-th road segment and the predicted SOC variation of the j-th road segment, where j = 2, 3, 4, ..., k.

According to an embodiment of the present disclosure, the road condition information includes a road type, a congestion level, and a route length; the predicted energy demand of the target road segment of the intended travel route is determined on the basis of unit route energy consumption and the route length of the target road segment, the unit route energy consumption of the target road segment is determined on the basis of the road type and the congestion level of the target road segment, and the predicted energy demand of the target road segment serves as the predicted SOC variation of the target road segment.

According to an embodiment of the present disclosure, the road condition information includes a road type, a congestion level, and a required travel time; the predicted energy demand of the target road segment of the intended travel route is determined on the basis of an SOC change rate and the required travel time of the target road segment, the SOC change rate of the target road segment is determined on the basis of the road type and the congestion level of the target road segment, and the predicted energy demand of the target road segment serves as the predicted SOC variation of the target road segment.

According to an embodiment of the present disclosure, the unit route energy consumption of the target road segment is acquired by looking up a preset table on the basis of the road type and the congestion level of the target road segment, wherein the preset table stores a correspondence relationship among road types, congestion levels, and unit route energy consumption.

According to an embodiment of the present disclosure, after the vehicle travelling on a road with a preset route length, to-be-updated unit route energy consumption in the preset table is updated on the basis of actual unit route energy consumption of the vehicle on the road with the preset route length.
or the to-be-updated unit route energy consumption in the preset table is updated to target unit route energy consumption, the target unit route energy consumption is calculated on the basis of the to-be-updated unit route energy consumption, a first weight corresponding to the to-be-updated unit route energy consumption, the actual unit route energy consumption, and a second weight corresponding to the actual unit route energy consumption.

According to an embodiment of the present disclosure, at least one of the engine and the electric motor of the vehicle is controlled on the basis of the actual SOC of the power battery of the vehicle and the target SOC for the road segment where the vehicle is located includes:
on the basis of the actual SOC and the target SOC, the vehicle is controlled to operate in a pure electric mode or a hybrid mode, wherein the electric motor works in the pure electric mode, and at least one of the engine and the electric motor works in the hybrid mode.

According to an embodiment of the present disclosure, the vehicle is controlled to operate in a pure electric mode or a hybrid mode on the basis of the actual SOC and the target SOC includes: in a case where a vehicle speed of the vehicle is greater than or equal to a preset vehicle speed threshold:
the vehicle is controlled to operate in the pure electric mode when the difference between the actual SOC and the target SOC is greater than or equal to a preset difference; and
the vehicle is controlled to operate in the hybrid mode when the difference between the actual SOC and the target SOC is less than the preset difference.

According to an embodiment of the present disclosure, the vehicle speed threshold is positively correlated with the actual SOC.

According to an embodiment of the present disclosure, the road condition information includes at least one of: a road type, a road name, a road traffic sign, a road speed limit, a congestion level, a route length, a required travel time, an average vehicle speed, a gradient, traffic light information, and weather information.

According to an embodiment of the present disclosure, the k road segments are acquired by dividing on the basis of at least one of the road types and the average vehicle speed.

According to an embodiment of the present disclosure, the route length of a road segment is greater than or equal to a preset route threshold.

According to an embodiment of the present disclosure, at least one of the engine and the electric motor of the vehicle is controlled on the basis of the actual SOC of the power battery of the vehicle and the target SOC for the road segment where the vehicle is located includes:
on the basis of road condition information of the target road segment of the intended travel route, a category coefficient of the target road segment is determined; on the basis of the target SOC and the category coefficient of the target road segment, an equivalent factor corresponding to the target road segment is determined;
by using the equivalent factor and an equivalent consumption minimization strategy (ECMS), a first instantaneous output power of the power battery of the vehicle at each moment while operating on the target road segment is determined; and
on the basis of the actual SOC and the first instantaneous output power, the engine and the electric motor of the vehicle are controlled.

According to an embodiment of the present disclosure, the equivalent factor corresponding to the target road segment is acquired by looking up a table on the basis of the category coefficient and the target SOC for the target road segment. According to an embodiment of the present disclosure, the first instantaneous output power of the power battery while operating on the target road segment is calculated on the basis of the following formula:$argH \left(u,SOC\left(t\right),t\right) = argmeng \left(u, t\right) + s \left(t\right) ∗ SOC \left(t\right) ,$ where H(u, SOC(t), t) is a Hamiltonian function established on the basis of the ECMS, argH(u, SOC(t), t) is the first instantaneous output power of the power battery at time t, meng(u, t) is a fuel consumption amount of the engine of the vehicle, s(t) is the equivalent factor at time t, SOC(t) is the SOC of the power battery at time t, ṠOC(t) is an SOC change rate , and u is a fuel consumption rate of the engine of the vehicle.

According to an embodiment of the present disclosure, the engine and the electric motor of the vehicle are controlled on the basis of the actual SOC and the first instantaneous output power includes:
a required power of the vehicle at time t is acquired;
on the basis of the actual SOC, the required power, the first instantaneous output power of the power battery at time t, and an NVH restriction power of the engine, a second instantaneous output power of the engine at time t and a third instantaneous output power of the power battery at time t are determined;
on the basis of the third instantaneous output power, the power battery is controlled to drive the electric motor; and
on the basis of the second instantaneous output power, the engine is controlled.

According to an embodiment of the present disclosure, the method further includes: if a condition is satisfied, the target SOC is re-determined, the condition including at least one of the following:
when the vehicle operates on the target road segment, a difference between the actual SOC of the power battery of the vehicle and the target SOC for the target road segment is greater than a set threshold; and
a position of the vehicle deviates from the intended travel route; and when the vehicle operates on the target road segment, road conditions of the target road segment changes.

According to an embodiment of the present disclosure, the intended travel route is at least a part of roads through which a navigation route determined by a user in a map application.

To achieve the above objective, an embodiment of a second aspect of the present disclosure provides a vehicle control system, which includes:
an electric motor;
an engine;
a power battery, which is configured to supply power to the electric motor; and
a controller, which is directly or indirectly connected to the electric motor and the engine, and is configured to: acquire an intended travel route of a vehicle, wherein the intended travel route is divided into k road segments, k being an integer greater than 1; determine target SOCs for the k road segments, wherein a target SOC for an i-th road segment is related to road condition information of road segments before and/or after the i-th road segment, and i = 2, 3, 4, ..., k-1; and when the vehicle travels on the intended travel route, control at least one of the engine and the electric motor of the vehicle on the basis of an actual SOC of the power battery of the vehicle and a target SOC for the road segment where the vehicle is located.

According to an embodiment of the present disclosure, the system further includes:
a generator, which is configured to generate electricity to charge the power battery; and
the controller is further directly or indirectly connected to the generator and is configured to, when the vehicle travels on the intended travel route, control working states of the engine, the electric motor, and the generator on the basis of the actual SOC and the target SOC for the road segment where the vehicle is located.

According to an embodiment of the present disclosure, the system further includes:
a positioning system, which is configured to perform positioning on the vehicle to acquire vehicle position information;
the controller is configured to:
determine the road segment where the vehicle is located on the basis of the vehicle position information.

According to an embodiment of the present disclosure, the system further includes:
a sensor, which is configured to acquire a vehicle speed of the vehicle;
the controller is configured to:
   in a case where the vehicle speed is greater than or equal to a preset vehicle speed threshold,
   when a difference between the actual SOC and the target SOC is greater than or equal to a preset difference, control the electric motor to work; and
   when the difference between the actual SOC and the target SOC is less than the preset difference, control at least one of the electric motor, the engine, and the generator to work; and
   in a case where the vehicle speed is less than the vehicle speed threshold, control the electric motor to work.

By dividing the intended travel route of the vehicle into road segments and comprehensively considering road condition information of a plurality of road segments, the system determines a target SOC corresponding to each road segment. This enables the vehicle to operate according to the target SOC for each road segment while operating through them, thereby allowing the vehicle to travel on the intended travel route with lower energy consumption.

To achieve the above objective, an embodiment of a third aspect of the present disclosure provides a chip, which includes a processor, the processor is configured to invoke and run a computer program from a memory, so that a vehicle equipped with the chip performs the vehicle control method according to the embodiment of the first aspect of the present disclosure.

According to the chip of the embodiment of the present disclosure, on the basis of the vehicle control method described above, the vehicle can travel on the intended travel route with lower energy consumption.

To achieve the above objective, an embodiment of a fourth aspect of the present disclosure provides a controller, which includes the processor which is configured to invoke and run a computer program from a memory, so that a vehicle equipped with the controller executes the vehicle control method according to the embodiment of the first aspect of the present disclosure.

According to the controller of the embodiment of the present disclosure, on the basis of the vehicle control method described above, the vehicle can travel on the intended travel route with lower energy consumption.

To achieve the above objective, an embodiment of a fifth aspect of the present disclosure provides a vehicle, which includes a memory, a processor, and a computer program stored on the memory and executable on the processor, the computer program, when executed by the processor, implementing the vehicle control method according to the embodiment of the first aspect of the present disclosure.

According to the vehicle of the embodiment of the present disclosure, on the basis of the vehicle control method described above, the vehicle can travel on the intended travel route with lower energy consumption.

To achieve the above objective, an embodiment of a sixth aspect of the present disclosure provides a computer-readable storage medium, having a computer program stored thereon, wherein the computer program, when executed by a processor, implementing the vehicle control method according to the embodiment of the first aspect of the present disclosure.

Additional aspects and advantages of the present disclosure will be given in part in the following description, will become apparent in part from the following description, or may be learned from the practice of the present disclosure.

### BRIEF DESCRIPTION OF THE DRAWINGS

With more detailed description of the embodiments of the present disclosure made with reference to the accompanying drawings, the above and other objectives, features, and advantages of the present disclosure will become more apparent. The drawings are intended to provide a further understanding of the embodiments of the present disclosure, form part of the specification, and are used together with the embodiments of the present disclosure to explain the present disclosure, but do not constitute a limitation to the present disclosure. In the drawings, the same reference numerals generally refer to the same components or steps.
FIG. 1 is a flowchart of a vehicle control method according to an embodiment of the present disclosure;
FIG. 2 is a schematic diagram of road segment division according to an embodiment of the present disclosure;
FIG. 3 is a schematic diagram of a predicted SOC range according to an embodiment of the present disclosure;
FIG. 4 is a schematic diagram of another predicted SOC range according to an embodiment of the present disclosure;
FIG. 5 is a block diagram of a vehicle control system according to an embodiment of the present disclosure;
FIG. 6 is a block diagram of another vehicle control system according to an embodiment of the present disclosure;
FIG. 7 is a block diagram of a vehicle according to an embodiment of the present disclosure.

### DETAILED DESCRIPTION

The embodiments of the present disclosure are described in detail below. Examples of the embodiments are illustrated in the accompanying drawings; wherein same or similar reference numerals throughout denote same or similar components or components having same or similar functions. The embodiments described below with reference to the drawings are exemplary and intended to explain the present disclosure, and will not be construed as limiting the present disclosure.

The following describes a vehicle control method, a vehicle control system, a chip, a controller, a vehicle, and a computer-readable storage medium provided in the embodiments of the present disclosure with reference to the accompanying drawings.

The current energy management strategy for hybrid electric vehicles primarily focuses on meeting power demands, maintaining the battery's SOC, and optimizing the working efficiency of the powertrain. During vehicle operation, the energy management strategy rationally allocates power among various power sources by considering their efficiency characteristics to enhance the driving efficiency of the powertrain. However, such an energy management strategy relies solely on the vehicle's own operating conditions for energy control, often leading to unnecessary energy consumption. To address the aforementioned issues, the present disclosure provides a vehicle control method.

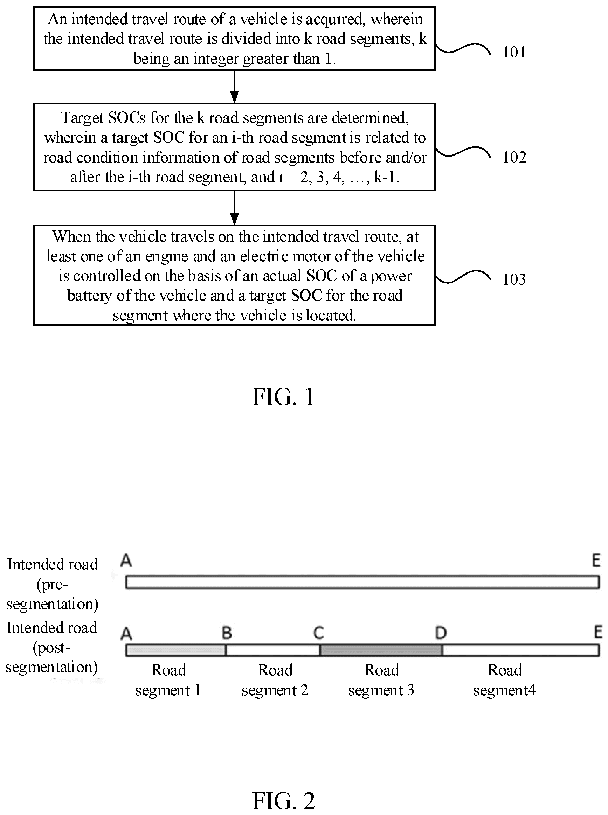

As shown in FIG. 1, the vehicle control method of the embodiment of the present disclosure may include:
Step 101: an intended travel route of a vehicle is acquired, wherein the intended travel route is divided into k road segments, k being an integer greater than 1.
Step 102: target SOCs for the k road segments are determined, wherein a target SOC for an i-th road segment is related to road condition information of road segments before and/or after the i-th road segment, and i = 2, 3, 4, ..., k-1.
Step 103: when the vehicle travels on the intended travel route, at least one of an engine and an electric motor of the vehicle is controlled on the basis of an actual SOC of a power battery of the vehicle and a target SOC for the road segment where the vehicle is located.

Specifically, the intended travel route refers to a road that the vehicle is about to travel. For example, the departure location of the vehicle is location A, the destination location is location E, and there are three roads from location A to location E, including a first road, a second road, and a third road. If the driver of the vehicle plans to take the second road, then at least part of the second road serves as the intended travel route in the embodiment of the present disclosure. The intended travel route includes at least one road segment. As shown in FIG. 2, after dividing the intended travel route, four road segments are acquired, namely road segment 1, road segment 2, road segment 3, and road segment 4. The starting point of road segment 1 is the starting point of the intended travel route, the endpoint of road segment 4 is the endpoint of the intended travel route, and adjacent road segments are connected end to end.

The intended travel route is divided into k road segments. When the vehicle is at the departure location, the target SOCs for the k road segments can be determined. According to a preset travel direction of the intended travel route, the 1st road segment among the k road segments is the road segment that the vehicle passes through first, and the k-th road segment is the road segment that the vehicle passes through last.

In one embodiment, a target SOC for the i-th road segment is related to road condition information of road segments before the i-th road segment. For example, the target SOC for the 2nd road segment is related to the road condition information of the 1st road segment, and the target SOC for the 3rd road segment is related to the road condition information of the 1st road segment and the 2nd road segment.

In one embodiment, the target SOC for the i-th road segment is related to road condition information of road segments after the i-th road segment. For example, the target SOC for the (k-2)-th road segment is related to the road condition information of the (k-1)-th road segment and the k-th road segment, and the target SOC for the (k-1)-th road segment is related to the road condition information of the k-th road segment.

In one embodiment, the target SOC for the i-th road segment is related to road condition information of road segments both before and after the i-th road segment. For example, the target SOC for the 3rd road segment is related to the road condition information of the 1st road segment, the 2nd road segment, and the 4th to the k-th road segments.

Before the vehicle departs, the target SOCs for the k road segments are determined by the vehicle. After the vehicle departs, on the basis of the target SOC for the road segment where the vehicle is located, as well as the actual SOC during vehicle travel, at least one of the engine and the electric motor of the vehicle is controlled. For example, if the vehicle is currently operating on the 3rd road segment, at least one of the engine and the electric motor is controlled on the basis of the actual SOC of the power battery at the current moment and the target SOC for the 3rd road segment. By comprehensively considering the road condition information of the plurality of the road segments to determine the target SOC corresponding to each road segment, and by enabling the vehicle to control the operation of the electric motor according to the target SOC for each road segment while operating on them, the vehicle can travel on the intended travel route with lower energy consumption.

In some embodiments, a method of acquiring the intended travel route may include: a navigation route determined by a user in a map application is acquired, and at least a part of roads along the navigation route is determined as the intended travel route. Specifically, the intended travel route may be confirmed on the basis of a start point and an end point selected by the user on a map. After the user selects the start point and the end point, the map may recommend at least one navigation route to the user. In the embodiments of the present disclosure, at least a part of roads along the navigation route determined by the user may be determined as the intended travel route.

In some embodiments, a method of acquiring the intended travel route may include: the intended travel route of the vehicle is predicted and determined on the basis of a current position and a travel direction of the vehicle, which may be set on the basis of actual conditions.

In some embodiments, one road segment may correspond to one target SOC. Based hereon, the target SOC is a battery SOC expected to be achieved when the vehicle finishes operating on a road segment. During vehicle travelling, the remaining charge of the battery may be controlled by switching driving modes on the basis of the target SOC. Alternatively, one road segment may correspond to at least two target SOCs. Based hereon, one road segment may be divided into a plurality of sections, with one section corresponding to one target SOC. When the vehicle travels within one section, the remaining charge of the battery may be controlled by switching driving modes on the basis of the target SOC of the section. The driving modes include a pure electric mode and a hybrid mode.

In some embodiments, the k road segments of the intended travel route are acquired by dividing on the basis of at least one of a road type and an average vehicle speed. For example, roads having the same road type are divided into one road segment, roads having the same average vehicle speed are divided into one road segment, or roads having both the same road type and the same average vehicle speed are divided into one road segment. It will be noted that the average vehicle speed refers to the average speed of historical vehicles passing the road. Having the same average vehicle speed means that the average vehicle speed falls within a same vehicle speed range.

In some embodiments, a route length of a road segment is greater than or equal to a preset route threshold. By constraining the route length of each road segment, it can be ensured that the number of divided road segments is not excessive, thereby reducing the occurrence of overly large computational load.

In some embodiments, the target SOCs for the k road segments are determined includes: predicted energy demand of at least k-1 road segments are determined on the basis of road condition information of at least k-1 consecutive road segments; and the target SOCs for the k road segments are determined on the basis of the predicted energy demand of the at least k-1 road segments.

Here, road condition information for each road segment can be acquired through a map application. On the basis of the road condition information of each road segment, the predicted energy demand of that road segment can be determined. The predicted energy demand may be a predicted total vehicle energy demand when the vehicle operates on the road segment, or it may be a predicted electric energy demand when the vehicle operates on the road segment. Since an initial SOC of the vehicle at the departure location is known, the target SOCs for the k road segments of the intended travel route can be determined on the basis of the predicted energy demand of at least k-1 road segments. Consequently, by controlling the vehicle travel on the basis of the target SOCs, the driving mode of the vehicle (pure electric mode, hybrid mode) can be made more suitable for the corresponding road segments, thereby reducing the energy consumption of the vehicle.

In some embodiments, the target SOCs for the k road segments are determined on the basis of the predicted energy demand of the at least k-1 road segments includes: a predicted SOC variation of a corresponding road segment is determined on the basis of the predicted energy demand; and the target SOCs for the k road segments are determined on the basis of the predicted SOC variations of the at least k-1 road segments.

Here, the predicted SOC variation refers to a predicted variation in SOC from the start point to the end point of a road segment for the vehicle. For any given road segment, when the predicted energy demand of that road segment is acquired, the predicted SOC variation of the road segment can be determined on the basis of its predicted energy demand. Since the initial SOC of the vehicle at the departure location is known, the target SOCs for the k road segments can be determined on the basis of the predicted SOC variations of at least one road segment.

In some embodiments, the target SOCs for the k road segments are determined on the basis of the predicted SOC variations of the at least k-1 road segments includes: a predicted SOC range of the vehicle at the end of the k road segments is determined on the basis of the predicted SOC variations of the at least k-1 road segments; and the target SOCs for the k road segments are determined on the basis of the predicted SOC ranges of the k road segments.

Here, the predicted SOC range is a range to which the SOC of the power battery belongs when the vehicle finishes operating on a road segment, as predicted. For example, if it is predicted that the battery SOC will be between 50% and 60% after the vehicle finishes operating on the 2nd road segment, then the predicted SOC range at the end of the 2nd road segment is from 50% to 60%. Given that the initial SOC of the vehicle at the departure location is known, the predicted SOC range at the end of the k road segments can be derived on the basis of the predicted SOC variations of at least k-1 road segments. The target SOCs for the k road segments can then be determined using the predicted SOC ranges of these k road segments.

In some embodiments, the target SOCs for the k road segments are determined on the basis of the predicted SOC ranges of the k road segments includes: a plurality of candidate SOC sequences are determined on the basis of the predicted SOC ranges of the k road segments; and a target SOC sequence is determined from the plurality of candidate SOC sequences, wherein the target SOC sequence is one, among the plurality of candidate SOC sequences, that enables the vehicle to have the lowest equivalent fuel consumption while operating on the intended travel route.

Here, the plurality of candidate SOC sequences may be determined on the basis of the predicted SOC ranges, wherein each candidate SOC sequence includes a set of SOCs. The candidate SOC sequence that enables the vehicle to have the lowest equivalent fuel consumption while operating on the intended travel route among the plurality of candidate SOC sequences is determined as the target SOC sequence. The SOCs included in the target SOC sequence are determined as the target SOCs for the respective road segments.

In some embodiments, a method of determining the candidate SOC sequence includes: one SOC is selected from the predicted SOC range of each of the k road segments respectively, and one candidate SOC sequence can be acquired among the plurality of candidate SOC sequences.

Specifically, by randomly selecting one SOC from the predicted SOC range of each road segment respectively, a set of SOCs can be acquired; the set of SOCs constitutes one candidate SOC sequence. After the plurality of candidate SOC sequences are determined from the predicted SOC ranges, a target SOC sequence can be determined from them, the target SOC sequence can enable the vehicle to have the lowest equivalent fuel consumption while operating on the intended travel route.

In an embodiment, a simulation model may be used to determine which candidate SOC sequence among the plurality of candidate SOC sequences enables the vehicle to have the lowest equivalent fuel consumption while operating on the intended travel route.

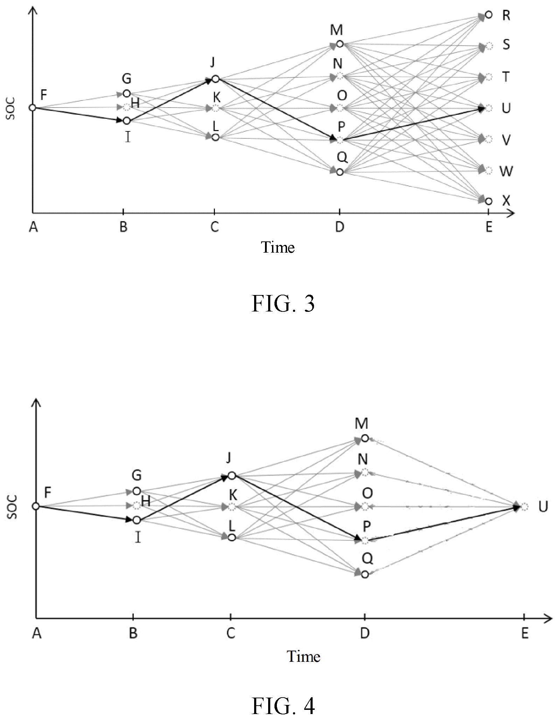

Specifically, as shown in FIG. 3, the initial SOC at point A is F. Assuming that point H is selected as a target SOC value within the predicted battery SOC range [I, G], point K is selected as a target SOC value within the predicted battery SOC range [L, J], point N is selected as a target SOC value within the predicted battery SOC range [Q, M], and point T is selected as a target SOC value within the predicted battery SOC range [X, R], then F-H-K-N-T constitutes one candidate SOC sequence.

In some embodiments, methods such as a dynamic programming algorithm or a Pontryagin's Minimum Principle (PMP) algorithm may be used to determine the target SOC sequence that enables the vehicle to have the lowest equivalent fuel consumption while operating on the intended travel route from the plurality of candidate SOC sequences. Using these algorithms, the predicted SOC ranges of the respective road segments serve as feasible domains for state quantities. For numerical calculation needs, the feasible domains are discretized, i.e., the predicted SOC range of each road segment is discretized. Specifically, for equal-interval discretization, if the difference between the maximum and minimum SOC values of a segment is greater than 0.005, discretization is performed at intervals of 0.005; if the difference between the maximum and minimum SOC values of a segment is less than 0.005, the SOC is divided into three equal parts for discretization. The control variables include an operating mode and an engine operating point (torque, speed), wherein the operating mode includes three types: pure electric, series, and parallel. To reduce computational load and accelerate the calculation process, the feasible domain of the engine operating point may be simplified. In series and parallel modes, the engine operating point adopts a control line calculated on the basis of optimal system efficiency. Optimizing the engine operating point needs to consider NVH restrictions, with the NVH constraints simplified to constraint lines related only to the vehicle speed to constrain the engine speed. Within the calculated feasible domains, solving the optimization problem yields the target SOC sequence with the minimum equivalent fuel consumption. The SOCs included in this target SOC sequence may be used as the target SOCs for the respective road segments in the intended travel route.

In some embodiments, the predicted SOC range at the end of a first road segment of the intended travel route is determined on the basis of the initial SOC of the vehicle on the intended travel route and the predicted SOC variation of the first road segment.

The predicted SOC range at the end of a non-first road segment of the intended travel route is determined on the basis of the predicted SOC variation of the non-first road segment and the predicted SOC range at the end of the preceding road segment of the non-first road segment.

Specifically, on the basis of the initial SOC and the predicted SOC variation of the first road segment of the intended travel route, the predicted SOC range of the vehicle at the end of the first road segment is determined. For each road segment in the intended travel route other than the first road segment, the predicted SOC range of the vehicle at the end of the road segment is determined on the basis of the predicted SOC variation of the road segment and the predicted SOC range at the end of the preceding road segment of that road segment.

In other words, the predicted SOC range of the vehicle at the end of the first road segment is predicted on the basis of the predicted SOC variation of the vehicle in the first road segment and the initial battery SOC of the vehicle in the first road segment. The predicted SOC range of the vehicle at the end of the second road segment is calculated on the basis of the predicted SOC range of the vehicle at the end of the first road segment and combined with the predicted SOC variation of the second road segment, and so on, to determine the predicted SOC ranges at the end of operation for each road segment in the intended travel route.

In some embodiments, the predicted SOC variation includes a first predicted SOC variation and a second predicted SOC variation. An upper limit value of the predicted SOC range of the first road segment of the intended travel route is determined on the basis of the initial SOC and the first predicted SOC variation of the first road segment, the first predicted SOC variation being an SOC variation when the vehicle operates on the corresponding road segment at a maximum allowable generating power. A lower limit value of the predicted SOC range of the first road segment is determined on the basis of the initial SOC and the second predicted SOC variation of the first road segment, the second predicted SOC variation being an SOC variation when the vehicle operates on the corresponding road segment at a maximum allowable discharging power. An upper limit value of the predicted SOC range of a non-first road segment of the intended travel route is determined on the basis of the first predicted SOC variation of the non-first road segment and an upper limit value of the predicted SOC range of the preceding road segment of the non-first road segment. And a lower limit value of the predicted SOC range of the non-first road segment is determined on the basis of the second predicted SOC variation of the non-first road segment and a lower limit value of the predicted SOC range of the preceding road segment of the non-first road segment.

Specifically, the maximum allowable generating power and maximum allowable discharging power of the vehicle on a corresponding road segment are related to the total energy demand of the vehicle on that road segment. Taking the road segment division shown in FIG. 3 as an example, the first road segment is road segment 1 corresponding to segment AB. As shown in FIG. 3, the initial SOC of the vehicle at point A is F. The upper limit of the SOC at point B is determined to be G when the vehicle operates in a hybrid mode, i.e., the vehicle uses only fuel in road segment 1 from point A to point B, and the battery is in a charging state. Thus, the upper limit value of the predicted SOC range of road segment 1 is G. The lower limit of the SOC at point B is determined to be I when the vehicle operates in a pure electric mode, i.e., the vehicle uses only electricity in road segment 1 from point A to point B, and the battery is in a discharging state. Thus, the lower limit value of the predicted SOC range of road segment 1 is I. Thereby, the predicted SOC range of road segment 1 can be determined as [I, G]. Assuming the upper limit value G of the battery SOC at point B is 75% and the lower limit value I is 65%, the predicted battery SOC range of road segment 1 is [65%, 75%]. Here, the slope of line segment FG is related to the maximum allowable generating power of the vehicle on road segment 1, and the slope of line segment FI is related to the maximum allowable discharging power of the vehicle on road segment 1.

Then, assuming segment BC is road segment 2, the upper limit value of the predicted SOC range of the vehicle at the end of road segment 2 is determined on the basis of the first predicted SOC variation of road segment 2 and the upper limit value of the predicted SOC range corresponding to the preceding road segment of road segment 2, i.e., road segment 1. The lower limit value of the predicted SOC range of the vehicle at the end of road segment 2 is determined on the basis of the second predicted SOC variation of road segment 2 and the lower limit value of the predicted SOC range corresponding to road segment 1. First, using the upper limit value G of the battery SOC of road segment 1 as the initial battery SOC of road segment 2, the upper limit of the SOC at point C is determined to be J on the basis of the value G and the first predicted SOC variation of road segment 2, i.e., the upper limit value of the predicted SOC range of road segment 2 is J. Then, using the lower limit value I of the battery SOC of road segment 1 as the initial battery SOC of road segment 2, the lower limit of the SOC at point C is determined to be L on the basis of the value I and the second predicted SOC variation of road segment 2, i.e., the lower limit value of the predicted SOC range of road segment 2 is L. Thereby, the predicted SOC range of road segment 2 is determined as [L, J].

In some embodiments, the predicted SOC range of the target road segment of the intended travel route is determined on the basis of a first predicted SOC range of the target road segment and a second predicted SOC range of the target road segment. In a case where the target road segment is the first road segment of the intended travel route, the first predicted SOC range of the target road segment is determined on the basis of the initial SOC of the vehicle on the intended travel route and the predicted SOC variation of the target road segment. In a case where the target road segment is not the first road segment of the intended travel route, the first predicted SOC range of the target road segment is determined on the basis of the first predicted SOC range of the preceding road segment of the target road segment and the predicted SOC variation of the target road segment. In a case where the target road segment is the last road segment of the intended travel route, the second predicted SOC range of the target road segment is the route-end SOC of the power battery when the vehicle travels to the end point of the intended travel route. And in a case where the target road segment is not the last road segment of the intended travel route, the second predicted SOC range of the target road segment is determined on the basis of the second predicted SOC range of the subsequent road segment of the target road segment and the predicted SOC variation of the subsequent road segment of the target road segment.

In the embodiments of the present disclosure, the first predicted SOC range of the 1st road segment is determined on the basis of the initial SOC of the vehicle on the intended travel route and the predicted SOC variation of the 1st road segment. The first predicted SOC range of the 2nd road segment is determined on the basis of the first predicted SOC range of the 1st road segment and the predicted SOC variation of the 2nd road segment. The second predicted SOC range of the k-th road segment is the route-end SOC of the power battery when the vehicle travels to the end point of the intended travel route. The second predicted SOC range of the (k-1)-th road segment is determined on the basis of the second predicted SOC range of the k-th road segment and the predicted SOC variation of the k-th road segment.

In some embodiments, the predicted SOC range of the target road segment described above is an intersection of the first predicted SOC range of the target road segment and the second predicted SOC range of the target road segment. Specifically, for any road segment in the intended travel route, the first predicted SOC range of the road segment and the second predicted SOC range of the road segment may be intersected to acquire the predicted SOC range at the end of the road segment, wherein the predicted SOC range at the end of the last road segment is the route-end SOC of the intended travel route. As shown in FIG. 4, which illustrates the finally acquired predicted SOC ranges, the initial SOC of the intended travel route is F, and the route-end SOC of the intended travel route is U. For example, in FIG. 4, the first road segment is road segment 1 corresponding to segment AB, and the second road segment is road segment 2 corresponding to segment BC. Assuming the first predicted SOC range of road segment 1 is [65%, 75%] and the second predicted SOC range of road segment 1 is [60%, 70%], then after taking the intersection, the predicted SOC range at the end of road segment 1 is [65%, 70%].

In some embodiments, the predicted SOC variation of the target road segment is determined on the basis of a charge-discharge power range corresponding to the target road segment. The charge-discharge power range is acquired on the basis of at least one of the following:
the predicted energy demand of the vehicle operating on the corresponding road segment, wherein the predicted energy demand is determined on the basis of road condition information of the corresponding road segment;
a noise, vibration, and harshness (NVH) restriction power of the engine of the vehicle; and
a maximum charge-discharge power of the power battery.

Here, the NVH restriction power is a power threshold value acquired by imposing certain limitations on the engine power in consideration of the need for the engine's NVH performance to meet certain indicators.

In the embodiments of the present disclosure, for any road segment A, a predicted energy demand of the vehicle operating on road segment A may be predicted on the basis of road condition information of road segment A. Considering that the road condition information, the initial SOC, the predicted energy demand, the NVH restriction power of the engine of the vehicle, and the maximum charge-discharge power of the power battery all affect a charge-discharge power of the power battery, a charge-discharge power range for road segment A may therefore be determined using at least one of the road condition information, the initial SOC, the predicted energy demand, the NVH restriction power of the engine of the vehicle, and the maximum charge-discharge power of the power battery.

In some embodiments, when the vehicle is at the start point of the intended travel route, an actual SOC of the power battery is the aforementioned initial SOC.

As shown in FIG. 2, the intended travel route includes road segment 1, road segment 2, road segment 3, and road segment 4. The start point of the intended travel route is the start point A of road segment 1. That is to say, when the vehicle travels to point A, the actual SOC of the power battery is the initial SOC of the intended travel route. The road condition information is used to reflect the road condition of a corresponding road segment. When the vehicle operates on a certain road segment, the vehicle utilizes the electric quantity of the power battery with the target SOC of that road segment as the target, so that when the vehicle finishes operating on the road segment, the remaining electric quantity of the power battery is close to the target SOC. In this way, by managing the electric quantity of the power battery of the vehicle on the basis of the road conditions of various road segments, the energy consumption of the vehicle can be effectively reduced.

In some embodiments, the route-end SOC of the power battery when the vehicle travels to the end point of the intended travel route is determined on the basis of the initial SOC. Out of consideration for battery characteristics, when the vehicle travels to the end point of the intended travel route, the remaining electric quantity of the power battery needs to be maintained within a certain range, for example, 20% to 30%. Based hereon, the route-end SOC of the power battery when the vehicle travels to the end point of the intended travel route can be determined on the basis of the initial SOC.

In some embodiments, the predicted energy demand of a target road segment is acquired on the basis of road condition information of the target road segment and energy consumption impact information, wherein the energy consumption impact information comprises at least one of: user driving style information and vehicle condition information.

Specifically, after inputting the road condition information of the target road segment and the energy consumption impact information into a target energy consumption prediction model, a predicted energy demand of the target road segment is output by the target energy consumption prediction model. The target energy consumption prediction model is determined from a plurality of preset energy consumption prediction models on the basis of the road condition information of the target road segment and the user driving style information.

The target energy consumption prediction model is determined from the plurality of preset energy consumption prediction models on the basis of the road condition information of the road segment and the user driving style information. The road condition information of the road segment and the energy consumption impact information are input into the target energy consumption prediction model, to acquire the predicted energy demand of the road segment output by the target energy consumption prediction model.

Specifically, the road condition information includes a road type, an average vehicle speed, a congestion level, a gradient, an altitude, traffic light information, and weather information. On the basis of the road type of road segment A and the driving style information of the driver of the vehicle, the target energy consumption prediction model can be determined. Then, by inputting the road type, the average vehicle speed, the congestion level, the gradient, the altitude, the traffic light information, the weather information, and the driving style information into the target energy consumption prediction model, the predicted energy demand of road segment A output by the model can be acquired.

In some embodiments, the aforementioned road condition information, driving style information, vehicle condition, and user vehicle setting habits may also be input together into the target energy consumption prediction model to acquire the predicted energy demand of the road segment output by the model, thereby improving the accuracy of the prediction result. Here, the vehicle condition includes a weight of the vehicle, a drag coefficient, a rolling resistance coefficient, a tire pressure, and the like. The vehicle setting habits may include air conditioning setting habits.

In some embodiments, the predicted SOC range includes only one value, which is recorded as a target value. The target SOCs for the k road segments are determined on the basis of the predicted SOC ranges of the k road segments includes: the target values of the predicted SOC ranges of the k road segments are determined as the target SOCs for the k road segments.

In the embodiments of the present disclosure, the predicted energy demand may be predicted electric energy consumption. The predicted SOC range determined on the basis of the predicted electric energy consumption may include only one value. For example, the predicted SOC range is [65% to 65%], and this range includes only one value, 65%. For any road segment, a target value of the predicted SOC range of the road segment may be determined as the target SOC for that road segment.

In some embodiments, a method of determining the predicted SOC ranges of the k road segments includes: a route-end SOC of the power battery when the vehicle travels to an end point of the intended travel route is determined; and target values for the k road segments are determined on the basis of predicted SOC variations of at least k-1 road segments and the route-end SOC.

Here, the route-end SOC is the target value for the k-th road segment. On the basis of the predicted SOC variations of the 2nd to the k-th road segments and the route-end SOC, the target values for the 1st to the (k-1)-th road segments can be derived, thereby acquiring the predicted SOC range that includes only one target value.

In some embodiments, the target value for the k-th road segment is the route-end SOC, and a target value for a (j-1)-th road segment is calculated on the basis of a target value for a j-th road segment and a predicted SOC variation of the j-th road segment, where j = 2, 3, 4, ..., k.

Specifically, assuming k = 5, since the route-end SOC has already been determined on the basis of the initial SOC, the route-end SOC can directly serve as the target SOC for the 5th road segment. After the target SOC for the 5th road segment is determined, the target SOC for the 4th road segment can be calculated on the basis of the target SOC for the 5th road segment and the predicted SOC variation of the 5th road segment. Then, on the basis of the target SOC for the 4th road segment and the predicted SOC variation of the 4th road segment, the target SOC for the 3rd road segment can be calculated, and so on. In this way, the target SOCs for the 3rd, 2nd and 1st road segments can be calculated. For example, if the target SOC for the 4th road segment is 40%, and the predicted SOC variation of the 4th road segment is 5%, then the target SOC for the 3rd road segment = target SOC for the 4th road segment - predicted SOC variation of the 4th road segment = 40% - 5% = 35%.

In some embodiments, the route-end SOC is determined on the basis of an initial SOC of the power battery of the vehicle on the intended travel route. In a case where the initial SOC is greater than or equal to a first preset threshold, the route-end SOC is a second preset threshold. In a case where the initial SOC is less than the first preset threshold, the route-end SOC is the first preset threshold; wherein the second preset threshold is greater than the first preset threshold.

Here, the second preset threshold may be a pre-calibrated power reservation SOC of, for example, 30%, and the first preset threshold may be a pre-calibrated minimum allowable SOC of, for example, 20%. It will be understood that 30% and 20% here are merely examples, and specific values may be adjusted on the basis of actual conditions. If the initial SOC of the intended travel route is greater than or equal to 20%, the route-end SOC of the intended travel route is determined to be 30%. If the initial SOC of the intended travel route is less than 20%, the route-end SOC of the intended travel route is determined to be 20%.

In some embodiments, a method of determining the predicted SOC ranges of the k road segments includes: an initial SOC of the power battery of the vehicle on the intended travel route is acquired; and the target values for the k road segments are determined on the basis of predicted SOC variations of at least k-1 road segments and the initial SOC.

Specifically, on the basis of the predicted SOC variations of the 1st to the k-th road segments and the initial SOC, the target values for the 1st to the k-th road segments can be derived, thereby acquiring the predicted SOC range that includes only one target value.

In some embodiments, a target value for the 1st road segment is calculated on the basis of the initial SOC and a predicted SOC variation of the 1st road segment, and the target value for the j-th road segment is calculated on the basis of the target value for the (j-1)-th road segment and a predicted SOC variation of the j-th road segment, where j = 2, 3, 4, ..., k.

Specifically, assuming k = 5, the target SOC for the 1st road segment can be calculated on the basis of the initial SOC and the predicted SOC variation of the 1st road segment. On the basis of the target SOC for the 1st road segment and the predicted SOC variation of the 2nd road segment, the target SOC for the 2nd road segment can be calculated, and so on. In this way, the target SOCs for the 3rd, 4th and 5th road segments can be calculated. For example, if the target SOC for the 3rd road segment is 40%, and the predicted SOC variation of the 4th road segment is 5%, then the target SOC for the 4th road segment = target SOC for the 3rd road segment + predicted SOC variation of the 4th road segment = 40% + 5% = 45%.

In some embodiments, the road condition information includes a road type, a congestion level, and a distance. The predicted energy demand of the target road segment of the intended travel route is determined on the basis of unit route energy consumption and a route length of the target road segment. The unit route energy consumption of the target road segment is determined on the basis of the road type and the congestion level of the target road segment. The predicted energy demand of the target road segment serves as the predicted SOC variation of the target road segment.

Specifically, the unit route energy consumption may adopt historical data of the vehicle. For example, if the vehicle previously traveled on road segment B and the actual unit route energy consumption during that travel was a, and if a road segment A in the intended travel route has the same road type and the same congestion level as road segment B, then the unit route energy consumption of road segment A can be determined as a. The predicted energy demand of the road segment can be acquired by multiplying the unit route energy consumption by the route length of the road segment.

In some embodiments, the unit route energy consumption of the target road segment described above is acquired by looking up a preset table on the basis of the road type and the congestion level of the target road segment.

Here, the preset table stores a correspondence relationship among road types, congestion levels, and unit route energy consumption. On the basis of this correspondence relationship, corresponding unit route energy consumption can be looked up on the basis of the road type and congestion level of a road segment.

In some embodiments, after the vehicle travels on a road of a preset route length, to-be-updated unit route energy consumption in the preset table is updated on the basis of an actual unit route energy consumption of the vehicle on the road of the preset route length.

Specifically, whenever the vehicle travels on a road of the preset route length, actual energy consumption of the vehicle on the road of the preset route length may be acquired. Actual unit route energy consumption is acquired on the basis of the actual energy consumption and the preset route length. The to-be-updated unit route energy consumption in the preset table is updated on the basis of the actual unit route energy consumption.

In some embodiments, the preset route length may be 1 kilometer. Each time the vehicle travels 1 kilometer, the actual energy consumption of the vehicle on this 1-kilometer road can be acquired to acquire the actual unit route energy consumption. In the preset table, the unit route energy consumption corresponding to the road type and congestion level of this 1-kilometer road is the to-be-updated unit route energy consumption. In the embodiments of the present disclosure, the to-be-updated unit route energy consumption in the preset table described above may be updated on the basis of the actual unit route energy consumption.

In some embodiments, the to-be-updated unit route energy consumption in the preset table is updated to the actual unit route energy consumption.

Assuming the to-be-updated unit route energy consumption in the preset table corresponds to road type 1 and congestion level 1, after updating, the unit route energy consumption corresponding to road type 1 and congestion level 1 in the preset table is the actual unit route energy consumption.

In some embodiments, the to-be-updated unit route energy consumption in the preset table is updated to target unit route energy consumption. The target unit route energy consumption is calculated on the basis of the to-be-updated unit route energy consumption, a first weight corresponding to the to-be-updated unit route energy consumption, the actual unit route energy consumption, and a second weight corresponding to the actual unit route energy consumption.

Specifically, a sum of the first weight and the second weight equals 1. The to-be-updated unit route energy consumption is multiplied by the first weight to acquire a first product, and the actual unit route energy consumption is multiplied by the second weight to acquire a second product. A sum of the first product and the second product is taken as the target unit route energy consumption. Assuming the to-be-updated unit route energy consumption in the preset table corresponds to road type 1 and congestion level 1, after updating, the unit route energy consumption corresponding to road type 1 and congestion level 1 in the preset table is the target unit route energy consumption.

In some embodiments, the road condition information includes a road type, a congestion level, and a required travel time. The predicted energy demand of a target road segment of the intended travel route is determined on the basis of an SOC change rate and the required travel time of the target road segment. The SOC change rate of the target road segment is determined on the basis of the road type and the congestion level of the target road segment. The predicted energy demand of the target road segment serves as the predicted SOC variation of the target road segment.

Specifically, the SOC change rate may adopt historical data of the vehicle. For example, if the vehicle previously traveled on road segment B and the actual SOC change rate during that travel was a, and if a road segment A of the intended travel route has the same road type and the same congestion level as road segment B, then the SOC change rate of road segment A can be determined as a. The predicted energy demand of the road segment can be acquired by multiplying the SOC change rate by the required travel time of the road segment.

In some embodiments, the step of controlling at least one of the engine and the electric motor of the vehicle on the basis of the actual SOC of the power battery of the vehicle and the target SOC for the road segment where the vehicle is located includes: the vehicle is controlled to operate in a pure electric mode or a hybrid mode on the basis of the actual SOC and the target SOC.

Here, the electric motor works in the pure electric mode, and at least one of the engine and the electric motor works in the hybrid mode. Specifically, in the pure electric mode, the power battery discharges to drive the electric motor to work, and the engine does not drive the vehicle. In the hybrid mode, the engine and the electric motor may jointly serve as power sources, or only one of them may serve as the power source.

In some embodiments, the step of controlling the vehicle to operate in a pure electric mode or a hybrid mode on the basis of the actual SOC and the target SOC described above includes:
in a case where a vehicle speed of the vehicle is greater than or equal to a preset vehicle speed threshold: the vehicle is controlled to operate in the pure electric mode when a difference between the actual SOC and the target SOC is greater than or equal to a preset difference; and the vehicle is controlled to operate in the hybrid mode when the difference between the actual SOC and the target SOC is less than the preset difference.

In the embodiments of the present disclosure, considering engine characteristics, when the vehicle speed is less than the vehicle speed threshold, the engine is not allowed to start. Based hereon, assuming the preset difference is 2%, in a case where the vehicle speed is greater than or equal to the preset vehicle speed threshold:
(a) when the actual SOC minus the target SOC is greater than or equal to 2%, the vehicle is controlled to switch to the pure electric mode and the engine is stopped; (b) when the actual SOC minus the target SOC is less than or equal to 2%, the engine is started and the vehicle is controlled to switch to the hybrid mode. The hybrid mode includes a series mode and a parallel mode. In the embodiments of the present disclosure, in a case where the vehicle switches to the hybrid mode, the parallel mode is prioritized for operation; if the vehicle does not meet the conditions for operating in the parallel mode, it operates in the series mode.

In some embodiments, in a case where the vehicle speed of the vehicle is less than the vehicle speed threshold, the vehicle is controlled to operate in the pure electric mode. Specifically, considering engine characteristics, when the vehicle speed is less than the vehicle speed threshold, the engine is not allowed to start. Therefore, if the vehicle speed is less than the vehicle speed threshold, the vehicle is directly switched to operate in the pure electric mode.

In some embodiments, the vehicle speed threshold is positively correlated with the actual SOC of the power battery. That is to say, when the actual SOC of the power battery is larger, the corresponding vehicle speed threshold is also larger; when the actual SOC of the power battery is smaller, the corresponding vehicle speed threshold is also smaller. Here, the vehicle speed threshold can be acquired through experimental calibration.

In some embodiments, if the intended travel route includes only one road segment, the step of controlling at least one of the engine and the electric motor of the vehicle on the basis of the actual SOC of the power battery of the vehicle and the target SOC for the road segment where the vehicle is located includes: a predicted energy demand of the vehicle operating on the road segment is determined on the basis of road condition information of the road segment; in a case where the initial SOC is greater than the route-end SOC: if an SOC difference is greater than or equal to the predicted energy demand, the vehicle is controlled to operate in the pure electric mode; if the SOC difference is less than the predicted energy demand, the vehicle is first controlled to operate in the hybrid mode to maintain the actual SOC of the power battery at the initial SOC, and is then controlled to operate in the pure electric mode. In a case where the initial SOC is less than or equal to the route-end SOC, the vehicle is controlled to operate in the hybrid mode.

Here, the SOC difference is a difference between the initial SOC and the route-end SOC. If the SOC difference is greater than or equal to the predicted energy demand, it indicates that the user's energy demand can be met using only battery power, and thus the vehicle can be controlled to travel on the intended travel route in the pure electric mode. If the SOC difference is less than the predicted energy demand, it indicates that the user's energy demand cannot be met using only battery power, and thus the vehicle can be controlled to first operate in the hybrid mode to maintain the actual SOC of the power battery at the initial SOC, and then operate in the pure electric mode while travelling on the intended travel route.

In some embodiments, the step of controlling at least one of the engine and the electric motor of the vehicle on the basis of the actual SOC of the power battery of the vehicle and the target SOC for the road segment where the vehicle is located includes:

In a case where the target SOC of the target road segment is less than the start SOC of the target road segment: when the actual SOC of the power battery is greater than the minimum allowable SOC or the target SOC of the target road segment, the vehicle is controlled to operate in the pure electric mode on the target road segment; when the actual SOC of the power battery is equal to the minimum allowable SOC or the target SOC of the target road segment, the vehicle is controlled to operate in the hybrid mode to maintain the actual SOC of the power battery unchanged.

In a case where the target SOC of the target road segment is greater than the start SOC of the target road segment: when the actual SOC of the power battery is less than a maximum allowable SOC or the target SOC of the target road segment, the vehicle is controlled to operate in the hybrid mode on the target road segment; when the actual SOC of the power battery is equal to the maximum allowable SOC or the target SOC of the target road segment, the vehicle is controlled to operate in the hybrid mode to maintain the actual SOC of the power battery unchanged; when the actual SOC of the power battery is greater than the maximum allowable SOC or the target SOC of the target road segment, the vehicle is controlled to operate in the pure electric mode on the target road segment.

In some embodiments, the step of controlling at least one of the engine and the electric motor of the vehicle on the basis of the actual SOC of the power battery of the vehicle and the target SOC for the road segment where the vehicle is located includes: a category coefficient of a target road segment is determined on the basis of road condition information of the target road segment of the intended travel route; an equivalent factor corresponding to the target road segment is determined on the basis of the target SOC and the category coefficient of the target road segment; determining, by using the equivalent factor and an Equivalent Consumption Minimization Strategy (ECMS), a first instantaneous output power of the power battery of the vehicle at each moment while operating on the target road segment; and controlling the engine and the electric motor of the vehicle on the basis of the actual SOC and the first instantaneous output power.

Here, the category coefficient indicates a road condition category of a road segment. For example, if a road segment has a road type of expressway and a congestion level of medium, the category coefficient of this road segment is 1. That is to say, category coefficient 1 indicates that the road segment has an expressway road type and a medium congestion level. For a road segment A, an equivalent factor corresponding to road segment A can be determined on the basis of the target SOC of road segment A and the category coefficient of road segment A. It will be noted that this equivalent factor is the equivalent factor in the ECMS, and reference may be made to the explanation of the ECMS, which is not elaborated here. The first instantaneous output power of the power battery at each moment can be determined by using the equivalent factor and the ECMS. Since each road segment corresponds to its own equivalent factor, when the vehicle is operating on road segment A, the first instantaneous output power of the power battery at each moment during the time period when the vehicle operates on road segment A is determined on the basis of the equivalent factor corresponding to road segment A and the ECMS.

In some embodiments, the equivalent factor corresponding to a target road segment is acquired by looking up a table on the basis of a category coefficient and a target SOC of the target road segment.

Specifically, a target SOC corresponding to the target road segment may be acquired, wherein the target road segment is any road segment in the intended travel route. An equivalent factor corresponding to the target road segment is acquired by looking up the table on the basis of the category coefficient and the target SOC of the target road segment. Specifically, the equivalent factor corresponding to the category coefficient and the target SOC of the target road segment may be looked up in a table. Here, the table stores a correspondence relationship among category coefficients, target SOCs, and equivalent factors.

In some embodiments, the first instantaneous output power of the power battery while operating on the target road segment is calculated on the basis of the following formula:
argH(u,SOC(t),t) = argmeng(u,t)+s(t)∗ SOC(t),
where H(u, SOC(t), t) is a Hamiltonian function established on the basis of the ECMS, argH(u, SOC(t), t) is the first instantaneous output power of the power battery at time t, meng(u, t) is a fuel consumption amount of the engine of the vehicle, s(t) is the equivalent factor at time t, SOC(t) is the SOC of the power battery at time t, SOC(t) is an SOC change rate, and u is a fuel consumption rate of the engine of the vehicle.

Specifically, after the equivalent factor is acquired, the first instantaneous output power of the battery of the hybrid electric vehicle corresponding to the equivalent factor can be acquired by using the ECMS, thereby controlling the hybrid electric vehicle on the basis of the first instantaneous output power of the power battery. The time t may be any moment.

In some embodiments, the step of controlling the engine and the electric motor of the vehicle on the basis of the actual SOC and the first instantaneous output power includes: a required power of the vehicle at time t is acquired; a second instantaneous output power of the engine at time t and a third instantaneous output power of the power battery at time t are determined on the basis of the actual SOC, the required power, the first instantaneous output power of the power battery at time t, and an NVH restriction power of the engine; the power battery is controlled to drive the electric motor on the basis of the third instantaneous output power; and the engine is controlled on the basis of the second instantaneous output power

Here, the required power of the vehicle at time t may be determined on the basis of a vehicle speed and a depth to which a driver depresses an accelerator pedal. The second instantaneous output power of the engine at time t and the third instantaneous output power of the power battery at time t are determined on the basis of the actual SOC, the required power, the first instantaneous output power of the power battery at time t, and the NVH restriction power of the engine. Specifically, the second instantaneous output power of the engine should be lower than the NVH restriction power.

Thus, the output power can be acquired on the basis of a real-time optimized equivalent factor, achieving full-road, full-time-domain optimal energy management, thereby reducing energy consumption.

In some embodiments, if a condition is satisfied, the target SOC is re-determined. The condition includes at least one of the following:
when the vehicle operates on a target road segment, a difference between the actual SOC of the power battery of the vehicle and the target SOC for the target road segment is greater than a set threshold;
a position of the vehicle deviates from the intended travel route; and
when the vehicle operates on the target road segment, a road condition of the target road segment changes.

Considering that some unexpected situations may occur while the vehicle travels on the intended travel route, based herein, when the vehicle operates on the target road segment, if the difference between the actual SOC of the power battery of the vehicle and the target SOC for the target road segment is greater than the set threshold, the target SOC is re-determined.

When the position of the vehicle deviates from the intended travel route, the target SOC is re-determined.

When the vehicle operates on the target road segment, if the road condition of the target road segment changes, the target SOC is re-determined.

Specifically, the target road segment may be any road segment in the intended travel route. For example, if the vehicle is currently operating on road segment A and the difference between the actual SOC of the power battery of the vehicle and the target SOC for road segment A is greater than the set threshold, the target SOCs for road segment A and subsequent road segments are re-determined. If the position of the vehicle deviates from the intended travel route, the intended travel route of the vehicle changes, and a new intended travel route and target SOCs for the new intended travel route may be determined at this time. If the road condition of road segment A changes, for example, due to sudden traffic congestion, the target SOCs for road segment A and subsequent road segments are re-determined. In this way, it is possible to respond to unexpected situations that may occur on the intended travel route, thereby reducing the energy consumption of the vehicle.

In summary, according to the vehicle control method of the embodiments of the present disclosure, by dividing the intended travel route of the vehicle into road segments and determining a corresponding target SOC for each road segment respectively, the electric motor and the engine are controlled to work according to the target SOC of each road segment while the vehicle travels on the various road segments. This enables the vehicle to travel on the intended travel route with lower energy consumption, ultimately achieving a global optimum for the user's driving conditions.

Corresponding to the foregoing embodiments, the present disclosure further provides a vehicle control system.

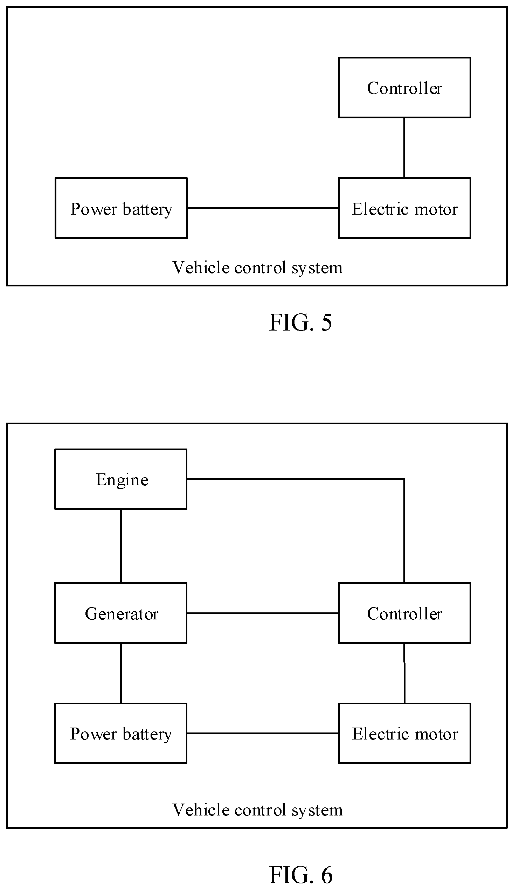

As shown in FIG. 5, the vehicle control system includes: an electric motor; an engine; a power battery, configured to supply power to the electric motor; and a controller, directly or indirectly connected to the electric motor and the engine, and configured to: acquire an intended travel route of a vehicle, wherein the intended travel route is divided into k road segments, k being an integer greater than 1; determine target SOCs for the k road segments, wherein a target SOC for an i-th road segment is related to road condition information of road segments before and/or after the i-th road segment, and i = 2, 3, 4, ..., k-1; and when the vehicle travels on the intended travel route, control at least one of the engine and the electric motor of the vehicle on the basis of an actual SOC of the power battery of the vehicle and a target SOC for the road segment where the vehicle is located.

In the embodiments of the present disclosure, the controller may be a single unit or a plurality of units, and the number of controllers is not limited herein. The electric motor may be a motor used to drive wheels of the vehicle. The power battery may output current to the electric motor, causing a rotor to rotate. The controller is directly or indirectly connected to the electric motor and the engine. For example, the controller may be connected to the electric motor via a motor inverter. The intended travel route refers to a road that the vehicle is about to travel on. For example, the departure location of the vehicle is location A, the destination is location E, and there are three roads from location A to location E, including a first road, a second road, and a third road. If the driver of the vehicle plans to take the second road, then at least a part of the second road serves as the intended travel route in the embodiment of the present disclosure. The intended travel route includes at least one road segment. As shown in FIG. 2, after the intended travel route is segmented, four road segments are acquired, namely road segment 1, road segment 2, road segment 3, and road segment 4. The starting point of road segment 1 is the starting point of the intended travel route, the endpoint of road segment 4 is the endpoint of the intended travel route, and adjacent road segments are connected end to end. The technical content of the embodiments of the present disclosure can refer to the descriptions in the aforementioned other embodiments, and details are not repeated here.

As shown in FIG. 6, the vehicle control system further includes:
a generator, configured to generate electricity to charge the power battery;
the controller is further directly or indirectly connected to the generator and is configured to, when the vehicle travels on the intended travel route, control working states of the engine, the electric motor, and the generator on the basis of the actual SOC and the target SOC for the road segment where the vehicle is located.

Here, the engine can drive wheels of the vehicle through fuel combustion, and can also drive the generator to generate electricity. The electricity generated by the generator can be charged into the power battery. On the basis of the target SOCs for the respective road segments of the intended travel route, the controller can control the working states of the electric motor, the engine, and the generator. Specifically, the working states may include start/stop states and output power.

In some embodiments, the vehicle control system further includes a positioning system. For example, the positioning system may be a Global Positioning System (GPS). The positioning system is installed on the vehicle and is configured to acquire vehicle position information. The controller can determine the road segment where the vehicle is currently located on the basis of the vehicle position information and use this road segment as a target road segment. While the vehicle operates on the target road segment, the actual SOC of the power battery can be acquired in real time. On the basis of the actual SOC and the target SOC for the target road segment, the working states of the electric motor, the engine, and the generator can be controlled.

In some embodiments, the vehicle control system further includes a sensor. The sensor is configured to acquire a vehicle speed. For example, the sensor may be a wheel speed sensor, an Inertial Measurement Unit (IMU), etc. The controller is configured to: in a case where the vehicle speed is greater than or equal to a preset vehicle speed threshold: control the electric motor to work when a difference between the actual SOC and the target SOC is greater than or equal to a preset difference; and control the electric motor, the engine, and the generator to work when the difference between the actual SOC and the target SOC is less than the preset difference; and in a case where the vehicle speed is less than the vehicle speed threshold, control the electric motor to work.

In some embodiments, the vehicle control system further includes a display terminal. The display terminal may display a fuel saving amount for the current trip after the vehicle travels to the end point of the intended travel route. The fuel saving amount is calculated as a difference between cumulative energy consumption acquired by executing the aforementioned vehicle control method and cumulative energy consumption, on the basis of simulation calibration values, acquired without executing the aforementioned vehicle control method. The simulation calibration values are pre-simulated in advance on the basis of categories of road segments and are stored in a vehicle controller for invocation. If navigation is enabled but the aforementioned vehicle control method is not performed, the pre-simulated data in the memory of the vehicle controller is updated.

In summary, by dividing the intended travel route of the vehicle into road segments and determining a corresponding target SOC for each road segment respectively, the system enables the working states of the electric motor, the generator, and the engine to be controlled on the basis of the target SOC for each road segment while the vehicle operates on the various road segments. This allows the vehicle to travel on the intended travel route with lower energy consumption.

Corresponding to the foregoing embodiments, the present disclosure further provides a computer-readable storage medium. The computer-readable storage medium of the embodiments of the present disclosure has a computer program stored thereon. The computer program, when executed by a processor, implements the aforementioned vehicle control method.

According to the computer-readable storage medium of the embodiments of the present disclosure, on the basis of the aforementioned vehicle control method, the vehicle can travel on the intended travel route with lower energy consumption.

Corresponding to the foregoing embodiments, the present disclosure further provides a chip. The chip can cause a vehicle to perform the vehicle control method as described above.

Corresponding to the foregoing embodiments, the present disclosure further provides a controller. The controller includes a processor, and the processor is configured to invoke and run a computer program from a memory, so that a vehicle equipped with the controller performs the vehicle control method as described above.

Corresponding to the foregoing embodiments, the present disclosure further provides a vehicle. The vehicle includes a memory, a processor, and a computer program stored on the memory and executable on the processor. The computer program, when executed by the processor, implements the vehicle control method as described above.

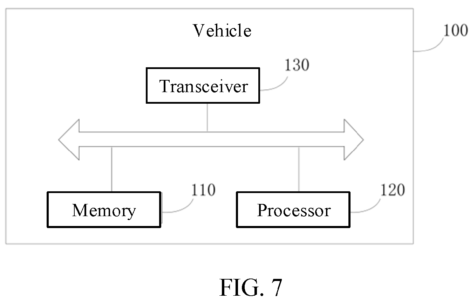

As shown in FIG. 7, a vehicle 100 of an embodiment of the present disclosure includes a memory 110, a processor 120, and a computer program of the vehicle stored on the memory 110 and executable on the processor 120. The processor 120, when executing the computer program, implements the vehicle control method.

For example, the processor 120 may be used to execute the method embodiments described above according to instructions in the computer program.

In some embodiments of the present disclosure, the processor 120 may include, but is not limited to:
a general-purpose processor, a Digital Signal Processor (DSP), an Application Specific Integrated Circuit (ASIC), a Field Programmable Gate Array (FPGA), or other programmable logic devices, discrete gate or transistor logic devices, discrete hardware components, etc.

In some embodiments of the present disclosure, the memory 110 includes, but is not limited to: volatile memory and/or non-volatile memory. The non-volatile memory may be a Read-Only Memory (ROM), a Programmable ROM (PROM), an Erasable PROM (EPROM), an Electrically Erasable PROM (EEPROM), or a flash memory. The volatile memory may be a Random Access Memory (RAM), which is used as an external cache. By way of illustrative but not restrictive description, many forms of RAM are available, such as Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM), and Direct Rambus RAM (DRRAM).

In some embodiments of the present disclosure, the computer program may be divided into one or more modules. The one or more modules are stored in the memory 110 and executed by the processor 120 to complete the method provided by the present disclosure. The one or more modules may be a series of computer program instruction segments capable of performing specific functions. The instruction segments are used to describe an execution process of the computer program in the vehicle 100.

As shown in FIG. 7, the vehicle 100 may further include:
a transceiver 130, which may be connected to the processor 120 or the memory 110.

Here, the processor 120 may control the transceiver 130 to communicate with other devices. Specifically, information or data may be sent to other devices, or information or data sent by other devices may be received. The transceiver 130 may include a transmitter and a receiver. The transceiver 130 may further include an antenna, and the number of antennas may be one or more.

It will be understood that various components of the vehicle 100 are connected via a bus system, wherein the bus system includes not only a data bus, but also a power bus, a control bus, and a status signal bus.

According to the vehicle of the embodiments of the present disclosure, on the basis of the aforementioned vehicle control method, the vehicle can travel on the intended travel route with lower energy consumption.

It will be noted that the logic and/or steps represented in the flowchart or otherwise described herein, for example, may be considered as an ordered list of executable instructions for implementing logical functions, and may be specifically implemented in any computer-readable medium, for use by an instruction execution system, apparatus, or device (such as a computer-based system, a system including a processor, or another system that can fetch instructions from the instruction execution system, apparatus, or device and execute the instructions), or for use in combination with the instruction execution system, apparatus, or device. For the purposes of this specification, a "computer-readable medium" can be any apparatus that can contain, store, communicate, propagate, or transport a program for use by or in connection with the instruction execution system, apparatus, or device. More specific examples (a non-exhaustive list) of the computer-readable medium include the following: an electrical connection portion (electronic device) having one or more wires, a portable computer diskette (magnetic device), a random access memory (RAM), a read-only memory (ROM), an erasable programmable read-only memory (EPROM or flash memory), a fiber optic device, and a portable compact disc read-only memory (CDROM). Additionally, the computer-readable medium may even be paper or another suitable medium on which the program can be printed, because the program can be electronically acquired, for example, by optically scanning the paper or other medium, followed by editing, interpretation, or, if necessary, other suitable processing, and then stored in a computer memory.

It will be understood that portions of the present disclosure may be implemented in hardware, software, firmware, or a combination thereof. In the aforementioned implementation methods, a plurality of steps or methods may be implemented with software or firmware stored in a memory and executed by a suitable instruction execution system. For example, if implemented in hardware, as in another implementation method, they may be implemented using any one or a combination of the following techniques well known in the art: discrete logic circuits having logic gates for implementing logic functions on data signals, application-specific integrated circuits having appropriate combinational logic gates, programmable gate arrays (PGAs), field programmable gate arrays (FPGAs), etc.

In the description of the present specification, descriptions with reference to the terms "one embodiment," "some embodiments," "example," "specific example," or "some examples," etc., mean that specific features, structures, materials, or characteristics described in connection with the embodiment or example are included in at least one embodiment or example of the present disclosure. In the present specification, schematic representations of the above terms do not necessarily refer to the same embodiment or example. Moreover, the described specific features, structures, materials, or characteristics may be combined in any suitable manner in any one or more embodiments or examples.

Furthermore, the terms "first" and "second" are used for descriptive purposes only and are not to be construed as indicating or implying relative importance or implicitly indicating the quantity of the indicated technical features. Thus, features defined with "first" or "second" may explicitly or implicitly include at least one such feature. In the description of the present disclosure, "a plurality of" means at least two, for example, two, three, etc., unless otherwise specifically defined.

In the present disclosure, unless otherwise explicitly specified and defined, the terms "installed," "connected," "coupled," "fixed," and other terms will be understood broadly. For example, they may be fixed connections, detachable connections, or integrated connections; they may be mechanical connections, electrical connections, or may communicate with each other; they may be directly connected, indirectly connected through an intermediate medium, or may be internal connections between two components or interaction relationships between two components, unless otherwise explicitly defined. For those of ordinary skill in the art, the specific meanings of the above terms in the present disclosure will be understood according to specific situations.

Although embodiments of the present disclosure have been shown and described above, it will be understood that the above embodiments are exemplary and will not be construed as limiting the present disclosure. Those of ordinary skill in the art may make changes, modifications, substitutions, and variations to the above embodiments within the scope of the present disclosure.

## Claims

1. A vehicle control method, comprising: acquiring an intended travel route of a vehicle, the intended travel route being divided into k road segments, and k being an integer greater than 1;
determining target states of charge (SOCs) for the k road segments, wherein a target SOC for an i-th road segment is related to road condition information of road segments before and/or after the i-th road segment, and i = 2, 3, 4, ..., k-1; and
when the vehicle travels on the intended travel route, controlling at least one of an engine and an electric motor of the vehicle on the basis of an actual SOC of a power battery of the vehicle and a target SOC for the road segment where the vehicle is located.

2. The method according to claim 1, wherein determining the target SOCs for the k road segments comprises:
determining predicted energy demand of at least k-1 road segments on the basis of the road condition information of at least k-1 consecutive road segments; and determining the target SOCs for the k road segments on the basis of the predicted energy demand of the at least k-1 road segments.

3. The method according to claim 2, wherein determining the target SOCs for the k road segments on the basis of the predicted energy demand of the at least k-1 road segments comprises:
determining a predicted SOC variation of a corresponding road segment on the basis of the predicted energy demand; and
determining the target SOCs for the k road segments on the basis of the predicted SOC variations of the at least k-1 road segments.

4. The method according to claim 3, wherein determining the target SOCs for the k road segments on the basis of the predicted SOC variations of the at least k-1 road segments comprises:
determining a predicted SOC range of the vehicle at the end of the k road segments on the basis of the predicted SOC variations of the at least k-1 road segments; and
determining the target SOCs for the k road segments on the basis of the predicted SOC ranges of the k road segments.

5. The method according to claim 4, wherein determining the target SOCs for the k road segments on the basis of the predicted SOC ranges of the k road segments comprises:
determining a plurality of candidate SOC sequences on the basis of the predicted SOC ranges of the k road segments; and
determining a target SOC sequence from the plurality of candidate SOC sequences, wherein the target SOC sequence is one, among the plurality of candidate SOC sequences, that enables the vehicle to have the lowest equivalent fuel consumption while operating on the intended travel route.

6. The method according to claim 5, wherein a method of determining the candidate SOC sequence comprises: selecting one SOC from the predicted SOC range of each of the k road segments respectively, to acquire one candidate SOC sequence among the plurality of candidate SOC sequences.

7. The method according to any one of claims 4 to 6, wherein the predicted SOC range at the end of a first road segment of the intended travel route is determined on the basis of an initial SOC of the vehicle on the intended travel route and the predicted SOC variation of the first road segment;
the predicted SOC range at the end of a non-first road segment of the intended travel route is determined on the basis of the predicted SOC variation of the non-first road segment and the predicted SOC range at the end of the preceding road segment of the non-first road segment.

8. The method according to claim 7, wherein the predicted SOC variation comprises a first predicted SOC variation and a second predicted SOC variation; an upper limit value of the predicted SOC range of the first road segment of the intended travel route being determined on the basis of the initial SOC and the first predicted SOC variation of the first road segment, the first predicted SOC variation being a SOC variation when the vehicle operates on the corresponding road segment at a maximum allowable generating power;
a lower limit value of the predicted SOC range of the first road segment being determined on the basis of the initial SOC and the second predicted SOC variation of the first road segment, the second predicted SOC variation being a SOC variation when the vehicle operates on the corresponding road segment at a maximum allowable discharging power;
an upper limit value of the predicted SOC range of the non-first road segment of the intended travel route being determined on the basis of the first predicted SOC variation of the non-first road segment and an upper limit value of the predicted SOC range of the preceding road segment of the non-first road segment; and
a lower limit value of the predicted SOC range of the non-first road segment being determined on the basis of the second predicted SOC variation of the non-first road segment and a lower limit value of the predicted SOC range of the preceding road segment of the non-first road segment.

9. The method according to any one of claims 4 to 8, wherein the predicted SOC range of the target road segment of the intended travel route is determined on the basis of a first predicted SOC range of the target road segment and a second predicted SOC range of the target road segment;
in a case where the target road segment is the first road segment of the intended travel route, the first predicted SOC range of the target road segment is determined on the basis of the initial SOC of the vehicle on the intended travel route and the predicted SOC variation of the target road segment;
in a case where the target road segment is not the first road segment of the intended travel route, the first predicted SOC range of the target road segment is determined on the basis of the first predicted SOC range of the preceding road segment of the target road segment and the predicted SOC variation of the target road segment;
in a case where the target road segment is the last road segment of the intended travel route, the second predicted SOC range of the target road segment is a route-end SOC of the power battery when the vehicle travels to an end point of the intended travel route; and
in a case where the target road segment is not the last road segment of the intended travel route, the second predicted SOC range of the target road segment is determined on the basis of the second predicted SOC range of the subsequent road segment of the target road segment and the predicted SOC variation of the subsequent road segment of the target road segment.

10. The method according to claim 9, wherein the predicted SOC range of the target road segment is an intersection of the first predicted SOC range of the target road segment and the second predicted SOC range of the target road segment.

11. The method according to claim 9, wherein the predicted SOC variation of the target road segment is determined on the basis of a charge-discharge power range corresponding to the target road segment; and the charge-discharge power range is acquired on the basis of at least one of the following:
the predicted energy demand of the vehicle operating on the corresponding road segment, the predicted energy demand being determined on the basis of the road condition information of the corresponding road segment;
a noise, vibration, and harshness (NVH) restriction power of the engine of the vehicle; and a maximum charge-discharge power of the power battery.

12. The method according to claim 11, wherein the predicted energy demand of the target road segment is acquired on the basis of the road condition information of the target road segment and energy consumption impact information, wherein the energy consumption impact information comprises at least one of: user driving style information and vehicle condition information.

13. The method according to any one of claims 4 to 12, wherein the predicted SOC range comprises only one value, the value being recorded as a target value;
determining the target SOCs for the k road segments on the basis of the predicted SOC ranges of the k road segments comprising: determining the target values of the predicted SOC ranges of the k road segments as the target SOCs for the k road segments.

14. The method according to claim 13, wherein a method of determining the predicted SOC ranges of the k road segments comprises:
determining the route-end SOC of the power battery when the vehicle travels to the end point of the intended travel route; and
determining the target values for the k road segments on the basis of the predicted SOC variations of the at least k-1 road segments and the route-end SOC.

15. The method according to claim 14, wherein a target value for a k-th road segment is the route-end SOC, and a target value for a (j-1)-th road segment is calculated on the basis of a target value for a j-th road segment and a predicted SOC variation of the j-th road segment, where j = 2, 3, 4, ..., k.

16. The method according to claim 9 or 14, wherein the route-end SOC is determined on the basis of an initial SOC of the power battery of the vehicle on the intended travel route.

17. The method according to claim 16, wherein, in a case where the initial SOC is greater than or equal to a first preset threshold, the route-end SOC is a second preset threshold; and
in a case where the initial SOC is less than the first preset threshold, the route-end SOC is the first preset threshold; wherein the second preset threshold is greater than the first preset threshold.

18. The method according to claim 13, wherein a method of determining the predicted SOC ranges of the k road segments comprises: acquiring an initial SOC of the power battery of the vehicle on the intended travel route; and determining target values for the k road segments on the basis of the predicted SOC variations of the at least k-1 road segments and the initial SOC.

19. The method according to claim 18, wherein a target value for the first road segment is calculated on the basis of the initial SOC and the predicted SOC variation of the first road segment, and the target value for the j-th road segment is calculated on the basis of the target value for the (j-1)-th road segment and the predicted SOC variation of the j-th road segment, where j = 2, 3, 4, ..., k.

20. The method according to claim 13, wherein the road condition information comprises a road type, a congestion level, and a route length; the predicted energy demand of the target road segment of the intended travel route being determined on the basis of unit route energy consumption and the route length of the target road segment, the unit route energy consumption of the target road segment being determined on the basis of the road type and the congestion level of the target road segment, and the predicted energy demand of the target road segment serving as the predicted SOC variation of the target road segment.

21. The method according to claim 13, wherein the road condition information comprises a road type, a congestion level, and a required travel time; the predicted energy demand of the target road segment of the intended travel route being determined on the basis of an SOC change rate and the required travel time of the target road segment, the SOC change rate of the target road segment being determined on the basis of the road type and the congestion level of the target road segment, and the predicted energy demand of the target road segment serving as the predicted SOC variation of the target road segment.

22. The method according to claim 20, wherein the unit route energy consumption of the target road segment is acquired by looking up a preset table on the basis of the road type and the congestion level of the target road segment, wherein the preset table storing a correspondence relationship among road types, congestion levels, and unit route energy consumption.

23. The method according to claim 22, wherein, after the vehicle travelling on a road with a preset route length, to-be-updated unit route energy consumption in the preset table is updated on the basis of actual unit route energy consumption of the vehicle on the road with the preset route length.

24. The method according to claim 23, wherein the to-be-updated unit route energy consumption in the preset table is updated to the actual unit route energy consumption;
or the to-be-updated unit route energy consumption in the preset table is updated to target unit route energy consumption, the target unit route energy consumption being calculated on the basis of the to-be-updated unit route energy consumption, a first weight corresponding to the to-be-updated unit route energy consumption, the actual unit route energy consumption, and a second weight corresponding to the actual unit route energy consumption.

25. The method according to any one of claims 1 to 24, wherein controlling at least one of the engine and the electric motor of the vehicle on the basis of the actual SOC of the power battery of the vehicle and the target SOC for the road segment where the vehicle is located comprises:
controlling the vehicle to operate in a pure electric mode or a hybrid mode on the basis of the actual SOC and the target SOC, wherein the electric motor works in the pure electric mode, and at least one of the engine and the electric motor works in the hybrid mode.

26. The method according to claim 25, wherein controlling the vehicle to operate in the pure electric mode or the hybrid mode on the basis of the actual SOC and the target SOC comprises: in a case where a vehicle speed of the vehicle is greater than or equal to a preset vehicle speed threshold:
controlling the vehicle to operate in the pure electric mode when the difference between the actual SOC and the target SOC is greater than or equal to a preset difference; and
controlling the vehicle to operate in the hybrid mode when the difference between the actual SOC and the target SOC is less than the preset difference.

27. The method according to claim 26, wherein, in a case where the vehicle speed of the vehicle is less than the vehicle speed threshold, the vehicle is controlled to operate in the pure electric mode.

28. The method according to claim 26 or 27, wherein the vehicle speed threshold is positively correlated with the actual SOC.

29. The method according to any one of claims 1 to 28, wherein the road condition information comprises at least one of: a road type, a road name, a road traffic sign, a road speed limit, a congestion level, a route length, a required travel time, an average vehicle speed, a gradient, traffic light information, and weather information.

30. The method according to any one of claims 1 to 29, wherein the k road segments are acquired by dividing on the basis of at least one of the road type and the average vehicle speed.

31. The method according to claim 30, wherein the route length of a road segment is greater than or equal to a preset route threshold.

32. The method according to any one of claims 1 to 31, wherein controlling at least one of the engine and the electric motor of the vehicle on the basis of the actual SOC of the power battery of the vehicle and the target SOC for the road segment where the vehicle is located comprises:
determining a category coefficient of the target road segment on the basis of road condition information of the target road segment of the intended travel route;
determining an equivalent factor corresponding to the target road segment on the basis of the target SOC and the category coefficient of the target road segment;
determining, by using the equivalent factor and an equivalent consumption minimization strategy (ECMS), a first instantaneous output power of the power battery of the vehicle at each moment while operating on the target road segment; and
controlling the engine and the electric motor of the vehicle on the basis of the actual SOC and the first instantaneous output power.

33. The method according to claim 32, wherein the equivalent factor corresponding to the target road segment is acquired by looking up a table on the basis of the category coefficient and the target SOC for the target road segment.

34. The method according to claim 32, wherein the first instantaneous output power of the power battery while operating on the target road segment is calculated on the basis of the following formula:
argH(u,SOC(t),t) = argmeng(u,t) + s(t) * SOC(t), where H(u, SOC(t), t) is a Hamiltonian function established on the basis of the ECMS, argH(u, SOC(t), t) is the first instantaneous output power of the power battery at time t, meng(u, t) is a fuel consumption amount of the engine of the vehicle, s(t) is the equivalent factor at time t, SOC(t) is the SOC of the power battery at time t, SOC(t) is an SOC change rate, and u is a fuel consumption rate of the engine of the vehicle.

35. The method according to claim 32, wherein controlling the engine and the electric motor of the vehicle on the basis of the actual SOC and the first instantaneous output power comprises:
acquiring a required power of the vehicle at time t;
determining a second instantaneous output power of the engine at time t and a third instantaneous output power of the power battery at time t on the basis of the actual SOC, the required power, the first instantaneous output power of the power battery at time t, and an NVH restriction power of the engine;
controlling the power battery to drive the electric motor on the basis of the third instantaneous output power; and controlling the engine on the basis of the second instantaneous output power.

36. The method according to claim any one of claims 1 to 35, wherein the method further comprises:
re-determining the target SOC if a condition is satisfied, the condition comprising at least one of the following: when the vehicle operates on the target road segment, a difference between the actual SOC of the power battery of the vehicle and the target SOC for the target road segment being greater than a set threshold;
a position of the vehicle deviating from the intended travel route; and
when the vehicle operates on the target road segment, road conditions of the target road segment changing.

37. The method according to claim any one of claims 1 to 36, wherein the intended travel route is at least a part of roads through which a navigation route determined by a user in a map application.

38. A vehicle control system, comprising:
an electric motor;
an engine;
a power battery, configured to supply power to the electric motor; and
a controller, being directly or indirectly connected to the electric motor and the engine, and being configured to: acquire an intended travel route of a vehicle, the intended travel route being divided into k road segments, and k being an integer greater than 1; determine target SOCs for the k road segments, wherein a target SOC for an i-th road segment being related to road condition information of road segments before and/or after the i-th road segment, and i = 2, 3, 4, ..., k-1; and when the vehicle travels on the intended travel route, control at least one of the engine and the electric motor of the vehicle on the basis of an actual SOC of the power battery of the vehicle and a target SOC for the road segment where the vehicle is located.

39. The vehicle control system according to claim 38, wherein the system further comprises:
a generator, configured to generate electricity to charge the power battery;
the controller, being further directly or indirectly connected to the generator and being configured to, when the vehicle travels on the intended travel route, control working states of the engine, the electric motor, and the generator on the basis of the actual SOC and the target SOC for the road segment where the vehicle is located.

40. The vehicle control system according to claim 39, wherein the system further comprises:
a positioning system, configured to perform positioning on the vehicle to acquire vehicle position information;
the controller configured to: determine the road segment where the vehicle is located on the basis of the vehicle position information.

41. The vehicle control system according to claim 40, wherein further comprises:
a sensor, configured to acquire a vehicle speed of the vehicle;
the controller configured to:
in a case where the vehicle speed is greater than or equal to a preset vehicle speed threshold,
control the electric motor to work when a difference between the actual SOC and the target SOC is greater than or equal to a preset difference; and
control at least one of the electric motor, the engine, and the generator to work when the difference between the actual SOC and the target SOC is less than the preset difference; and
in a case where the vehicle speed is less than the vehicle speed threshold, control the electric motor to work.

42. A chip, comprising a processor, the processor configured to invoke and run a computer program from a memory, so that a vehicle equipped with the chip performs the vehicle control method according to any one of claims 1 to 37.

43. A controller, comprising a processor, the processor configured to invoke and run a computer program from a memory, so that a vehicle equipped with the controller performs the vehicle control method according to any one of claims 1 to 37.

44. A vehicle, comprising a memory, a processor, and a computer program stored on the memory and executable on the processor, the computer program, when executed by the processor, implementing the vehicle control method according to any one of claims 1 to 37.

45. A computer-readable storage medium, having a computer program stored thereon, wherein the computer program, when executed by a processor, implementing the vehicle control method according to any one of claims 1 to 37.
